# EUROPÄISCHE PATENTSCHRIFT

(11) **EP 0 999 287 B1**
(45) Veröffentlichungstag und Bekanntmachung des Hinweises auf die Patenterteilung: **23.08.2006**
(21) Anmeldenummer: 99118220.5
(22) Anmeldetag: 14.09.1999
(51) Int. Cl.: C21D 1/78, C21D 1/18, C21D 9/40, F16C 33/00

(54) **Verfahren zur Wärmebehandlung von Werkstücken aus Stahl und Verwendung eines wärmebehandelten Stahls**
Method for heat treating steel workpieces and use of the obtained workpieces
Procédé de traitement thermique de pièces en acier et l'utilisation des pièces obtenues

(30) Priorität: 28.10.1998 DE 19849679
(43) Veröffentlichungstag der Anmeldung: 10.05.2000
(73) Patentinhaber: SKF GmbH, 97421 Schweinfurt (DE)
(72) Erfinder: Nierlich, Wolfgang, 97424 Schweinfurt (DE)
(74) Vertreter: Gosdin, Michael

(56) Entgegenhaltungen:
- DE-A- 2 023 064
- DE-A- 2 324 750
- FR-A- 2 645 544
- GB-A- 1 361 553
- US-A- 4 023 988

## Beschreibung

Die Erfindung betrifft ein Verfahren zur Wärmebehandlung von Werkstücken aus Stahl, insbesondere aus Wälzlagerstahl, durch Härten. Des weiteren betrifft die Erfindung die Verwendung eines wärmebehandelten Stahls.

Ein Wärmebehandlungsverfahren für Werkstücke aus Stahl durch Härten ist beispielsweise aus der **DE-OS 20 23 064** bekannt. Dort ist beschrieben, daß ein Werkstück vor dem Härten zunächst mit einer Temperatur im Austenitbereich geglüht wird. Anschließend erfolgt ein Abkühlen des Werkstücks an Luft. Abschließend erfolgt ein Härtevorgang des Werkstücks durch Abschrecken. Aus der **US 4,023,988** ist gleichermaßen ein Verfahren zur Wärmebehandlung von Stahl-Werkstücken bekannt. Der Stahl wird auch hier einem Härtevorgang unterzogen, wobei er vor dem Härten geglüht wird. Hierzu wird das Material auf Temperaturen über 1000 °C erhitzt.

Werkstücke aus Stahl, wie z.B. Wälzlagerteile, an die hohe Anforderungen bezüglich Festigkeit, Gebrauchsdauer und Gefügestabilität gegen Alterung gestellt werden, verlangen im bearbeiteten Zustand einen Werkstoff mit einem homogenen Gefüge mit feinst verteilten globularen Karbiden.

Damit nach der Wärmebehandlung ein homogenes Gefüge erreicht wird, kann bereits bei der Herstellung des Werkstoffes die Erschmelzung besonders gesteuert werden. Hierzu ist jedoch ein relativ hoher Aufwand an Überwachungs- und Steuerungseinrichtungen erforderlich.

Des weiteren ist es bekannt, daß nach der Erschmelzung ein Glühen zur Homogenisierung des Gefüges durchgeführt wird. Dieses Glühen erstreckt sich in der Regel über mehrere Stunden.

An Wälzlager, die zum Einsatz in Getrieben vorgesehen sind, werden besonders hohe Anforderungen gestellt; das zur Schmierung des Wälzlagers vorgesehene Getriebeöl kann mit metallischem Abrieb verunreinigt sein. In diesem Zusammenhang sind Lösungen bekannt, nach denen die Lager abgedichtet oder zumindest mit einem Ölfilter versehen werden, der die metallischen Teilchen vom Lagerinneren, insbesondere von den Laufbahnen, abhalten soll. Weiterhin ist es bekannt, solche Lagerteile zu carbonitrieren. Nachteilhafterweise erfordern jedoch all diese Maßnahmen einen relativ hohen Aufwand und verursachen damit entsprechende Kosten.

Der Erfindung liegt daher die **Aufgabe** zugrunde, ein Wärmebehandlungsverfahren für Werkstücke aus Stahl durch Härten zu schaffen, mit dem auf einfache und damit kostengünstige Weise eine Homogenisierung des Werkstoffs, vorzugsweise im Mikrobereich, sowie eine Verfeinerung der globularen Karbide erreicht werden kann, die den Einsatz der so behandelten Werkstücke auch unter extremen Bedingungen erlauben. Weiterhin soll erreicht werden, daß eine Erhöhung der Korngrenzenenergie erfolgt. Schließlich soll eine Verwendung eines solchen wärmebehandelten Stahls vorgeschlagen werden, bei dem die damit erreichbaren Vorteile maximiert werden.

Die Lösung dieser Aufgabe durch die Erfindung ist dadurch gekennzeichnet, dass bei einem Wärmebehandlungsverfahren für Stahl-Werkstücke durch Härten, bei dem die Werkstücke vor dem Härten geglüht und anschließend abgekühlt werden, wobei das Glühen bei einer Temperatur von 1000 °C bis maximal dicht unter dem Schmelzpunkt des Stahls erfolgt, vorgesehen ist, dass die Glühdauer bis zu 120 Sekunden beträgt.

Durch die vorgeschlagene Glühdauer von bis zu 120 Sekunden wird einerseits erreicht, dass eine gute Homogenisierung des Werkstoffs im Mikrobereich erfolgt und die globularen Karbide im Werkstoff verfeinert werden, andererseits stellt die genannte Glühzeit einen so kurzen Zeitabschnitt dar, dass eine sehr wirtschaftliche Wärmebehandlung möglich wird.

Vorteilhafterweise erfolgt die Erwärmung des Werkstücks durch elektromagnetische Induktion; alternativ kann sie jedoch auch durch einen Laser bewerkstelligt werden.

Gemäß einer Weiterbildung wird das Glühen auf die Randzonen des Werkstücks begrenzt. Bevorzugt ist der Stahl ein Wälzlagerstahl nach DIN 17 230, vorzugsweise der Stahl 100 CrMn 6. Dadurch wird eine zusätzliche Erhöhung der Gebrauchsdauer infolge erhöhter Gefügestabilität gegen Alterung erreicht.

Die erfindungsgemäße Verwendung eines wärmebehandelten Stahls gemäß der vorstehenden Erfindung ist für mindestens einen Ring, nämlich den Außenring und/oder den Innenring, eines Wälzlagers vorgesehen, wobei die Wälzkörper des Wälzlagers aus Keramik, vorzugsweise aus Siliziumnitrid oder Aluminiumoxid, bestehen.

Es hat sich nämlich überraschenderweise herausgestellt, dass der nach dem beschriebenen Wärmebehandlungsverfahren gewonnene Stahl besonders vorteilhaft in sogenannten Hybridlagern eingesetzt werden kann, die aus Ringen aus Metall und Wälzkörpern aus Keramik bestehen. Durch den Einsatz des erfindungsgemäß wärmebehandelten Stahls mit Keramikwälzkörpern erhöht sich die Tragfähigkeit und die Lebensdauer des Lagers signifikant.

Durch das vor dem eigentlichen Härten durchgeführte relativ kurzzeitige Glühen - es sind in der Regel bereits geringere Zeiten als 120 Sekunden ausreichend - und durch die anschließende Abkühlung wird eine Homogenisierung des Werkstoffs im Mikrobereich erreicht. Wegen des Wechselspiels zwischen Glühtemperatur und Glühzeit erhöht sich bei Anwendung niedrigerer Temperaturen die Zeit in gewissem Maße.

Nach dem sich an das Glühen anschließende Härten, das in an sich bekannter Weise z.B. mit Abschrecken im Salzbad durchgeführt wird, kann im Gefüge eine Feinstverteilung von globularen Karbiden mit erheblich verminderter Größe gegenüber dem Ausgangszustand nachgewiesen werden. Das nach dem erfindungsgemäßen Verfahren erzeugte Gefüge weist verbesserte Zähigkeitseigenschaften sowie erhöhte Gefügestabilität gegenüber Alterung auf und führt zu einer Gebrauchsdauererhöhung. Das ist besonders der Fall bei Verwendung des erfindungsgemäßen Verfahrens für die Wärmebehandlung von Wälzlagerteilen, insbesondere für Getriebelager.

Wie bereits erläutert, ist es nicht notwendig, das gesamte Werkstück gleichmäßig zu glühen. Es genügt vielmehr in vielen Fällen, das Glühen auf die Oberflächenbereiche des Werkstücks zu begrenzen, in denen im Betrieb die höchsten Beanspruchungen auftreten. Das ist bei Wälzlagern der Bereich der Laufbahnen.

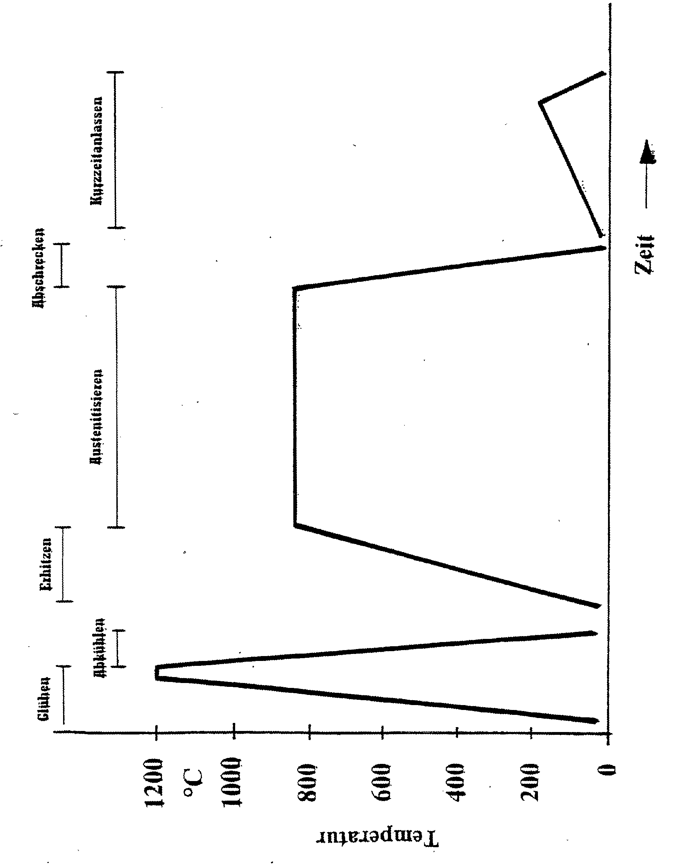

Ein Ausführungsbeispiel der Erfindung ist in der Figur dargestellt. Diese zeigt in schematischer Weise den Temperatur-Zeit-Verlauf für den Wälzlagerstahl 100 CrMn 6 bei der Wärmebehandlung.

Dieser Stahl weist folgende Zusammensetzung auf:
0,9 bis 1,05 % Kohlenstoff,
1,35 bis 1,65 % Chrom,
0,15 bis 0,35 % Silizium,
0,25 bis 0,45 % Mangan,
≦ 0,030 % Phosphor,
≦ 0,025 % Schwefel
sowie der unvermeidliche Rest an anderen Elementen.

Die mechanisch weichbearbeiteten Werkstücke, z.B. Wälzlagerringe, aus dem Stahl 100 CrMn 6 werden durch Induktions-Erwärmung in relativ kurzer Zeit - beispielsweise während 5 bis 20 Sekunden - kurzzeitig auf etwa 1200 °C erhitzt und anschließend abkühlt. Dabei erfolgt eine Homogenisierung des Gefüges zumindest an der Oberfläche bis in eine bestimmte Tiefe der Werkstücke.

Nach dem Abkühlen in Luft werden die Werkstücke dann in herkömmlicher Weise auf Austenitisierungstemperatur (z.B. ca. 840 °C) gebracht und eine bestimmte Zeit (z.B. 20 Minuten) auf dieser Temperatur gehalten.

Nach dem Austenitisieren werden die Werkstücke, z.B. im Salzbad, abgeschreckt. An dieses Abschrecken kann sich ein übliches Anlassen oder Vergüten anschließen. Die so behandelten Werkstücke weisen ein homogenes Gefüge mit feinst verteilten globularen Karbiden auf.

Wie bereits dargestellt, zeigt sich die erhöhte thermodynamische Stabilität in einem meßbar verminderten Härteabfall beim Anlassen.

Die aus dem erfindungsgemäß wärmebehandelten Stahl hergestellten Hybridlager zeichnen sich durch besonders hohe Lebensdauer, Tragfähigkeit und Festigkeit aus. Die Ringe - also der Lagerinnenring und der Lageraußenring - bestehen gegenständlich aus dem Stahl, der der beschriebenen Wärmebehandlung unterzogen wurden. Dazwischen sind Kugeln oder Wälzkörper aus Keramik angeordnet, die zusammen mit den Lagerringen den Lagerverbund bilden.

## Patentansprüche

1. Verfahren zur Wärmebehandlung von Werkstücken aus Stahl durch Härten, bei dem die Werkstücke vor dem Härten geglüht und anschließend abgekühlt werden, wobei das Glühen bei einer Glühtemperatur von 1000 °C bis maximal dicht unter dem Schmelzpunkt des Stahls erfolgt,
**dadurch gekennzeichnet,**
**dass** die Glühdauer bis zu 120 Sekunden beträgt.

2. Verfahren nach Anspruch 1, **dadurch gekennzeichnet, dass** die Erwärmung des Werkstücks durch elektromagnetische Induktion erfolgt.

3. Verfahren nach Anspruch 1, **dadurch gekennzeichnet, dass** die Erwärmung des Werkstücks durch einen Laser erfolgt.

4. Verfahren nach einem der Ansprüche 1 bis 3, **dadurch gekennzeichnet, dass** das Glühen auf Randzonen begrenzt wird.

5. Verfahren nach einem der Ansprüche 1 bis 4, **dadurch gekennzeichnet, dass** der Stahl ein Wälzlagerstahl nach DIN 17 230 ist.

6. Verfahren nach Anspruch 5, **dadurch gekennzeichnet, dass** der Stahl 100 CrMn 6 ist.

7. Verwendung eines wärmebehandelten Stahls nach einem der Ansprüche 1 bis 6 für mindestens einen Ring, nämlich den Außenring und/oder den Innenring, eines Wälzlagers, wobei die Wälzkörper des Wälzlagers aus Keramik, vorzugsweise aus Siliziumnitrid oder Aluminiumoxid, bestehen.

## Claims

1. A process for the heat treatment of steel workpieces by hardening, in which the workpieces are annealed and subsequently cooled before the hardening, wherein the annealing is carried out at an annealing temperature of 1,000°C up to a maximum of just below the melting point of steel,
**characterised in**
**that** the annealing time is up to 120 seconds.

2. A process according to Claim 1, **characterised in that** the heating of the workpiece is effected by electromagnetic induction.

3. A process according to Claim 1, **characterised in that** the heating of the workpiece is effected by a laser.

4. A process according to any one of Claims 1 to 3, **characterised in that** the annealing is limited to surface zones.

5. A process according to any one of Claims 1 to 4, **characterised in that** the steel is a rolling bearing steel in accordance with DIN 17 230.

6. A process according to Claim 5, **characterised in that** the steel is 100 CrMn 6.

7. Use of a heat-treated steel according to any one of Claims 1 to 6 for at least one ring, namely the outer ring and/or inner ring of a rolling bearing, wherein the rolling bodies of the rolling bearing consist of ceramic material, preferably of silicon nitride or aluminium oxide.

## Revendications

1. Procédé de traitement thermique de pièces en acier par durcissement par trempe, selon lequel les pièces sont soumises à un recuit avant la trempe puis refroidies, le recuit étant réalisé à une température comprise entre 1000 °C et au maximum une température située juste en dessous du point de fusion de l'acier, **caractérisé en ce que** la durée de recuit va jusqu'à 120 secondes.

2. Procédé selon la revendication 1, **caractérisé en ce que** le chauffage de la pièce est réalisé par induction électromagnétique.

3. Procédé selon la revendication 1, **caractérisé en ce que** le chauffage de la pièce est réalisé avec un laser.

4. Procédé selon une des revendications 1 à 3, **caractérisé en ce que** le recuit est limité à des zones périphériques.

5. Procédé selon une des revendications 1 à 4, caraçtérisé en ce que l'acier est un acier pour paliers à roulement selon DIN 17 230.

6. Procédé selon la revendication 5, **caractérisé en ce que** l'acier est de type 100 CrMn 6.

7. Utilisation d'un acier ayant subi un traitement thermique selon une des revendications 1 à 6 pour au moins une bague, à savoir la bague extérieure et/ou la bague intérieure, d'un palier à roulement, les corps de roulement du palier à roulement étant réalisés en céramique, de préférence en nitrure de silicium ou en oxyde d'aluminium.
